# EUROPEAN PATENT APPLICATION

(11) **EP 2 611 069 A1**
(43) Date of publication of application: **03.07.2013**
(21) Application number: 11250950.0
(22) Date of filing: 29.12.2011
(51) Int. Cl.: H04L 12/24, H04L 12/70

(54) **Distributed system management**

(71) Applicant: British Telecommunications Public Limited Company, London EC1A 7AJ (GB)
(72) Inventor: The designation of the inventor has not yet been filed
(74) Representative: Nash, Roger William

(57) **Abstract**

A system for managing user-specified compositions of software components is disclosed. The management of such distributed software applications is potentially so complex as to have been largely neglected. In embodiments of the invention, each composition includes a user-specific egress component at the end of the composition. By arranging software components to cumulatively annotate their output with an indication that they have been involved in the composition, the data arriving at the egress node can be checked against a specification of the user-specified composition. Importantly, by using annotations in this way, component software processes can be shared between different users without requiring an overly-complex management system. Additionally, in preferred embodiments, the annotation includes a reference to log files generated by each software component involved in the composition. In this way, the amount of information that needs to be included in the annotation is reduced whilst still allowing the egress component to access detailed information about the processing which the data arriving at the egress component has undergone.

## Description

The present invention relates to the management of distributed software applications. It has particular utility in the management of so-called Web mashups.

An example of a system hosting software applications built from pre-existing components is seen in US Patent 7,680,939 (see http://pdf11.patentorder.com/pdf/US7680939.pdf). There is no disclosure of whether the component modules described therein are shared between different pipes. There are obvious benefits of sharing component modules between different software applications.

Existing systems for hosting software applications built from pre-existing components neglect the need for the provider of the hosting service to offer quality of service guarantees to developers or end users of the hosted software applications.

According to a first aspect of the present invention, there is provided a method of checking the operation of a distributed software application involving the sequential execution of a plurality of software components, said method comprising:
arranging one or more of said software components to provide information concerning the software component together with data derived by said component to a subsequent software component in said sequential execution; and
at said subsequent software component, checking the annotation of said derived data for compliance with stored expectations.

By providing information concerning a software component together with data derived by said software component to a subsequently used software component in a sequential execution of software components, the manner in which the derived data was derived can be checked to be in conformance with expectations for said derived data.

There now follows, by way of example only, a description of embodiments of the present invention. This description refers to the accompanying drawings in which:
Figure 1 illustrates a computer network on which a cycle route planning application runs;
Figure 2 illustrates a specification of a data mashup used to supply data for the cycle route planning application;
Figure 3 illustrates a schema for messages passing between processes hosted in a mashup-hosting data centre;
Figure 4 illustrates a log file maintained by each data mashup component;
Figure 5 is a flow-chart illustrating the processing carried out by an ingress mashup component;
Figure 6 is a flow-chart illustrating the processing carried out by an intermediate mashup component;
Figure 7 is a flow-chart illustrating the processing carried out by an egress mashup component.

The following description of an embodiment presents an example use case involving a cycle route planning application. It is to be understood that embodiments of this invention are in no way limited to such an application, or even to the processing of geospatial data feeds.

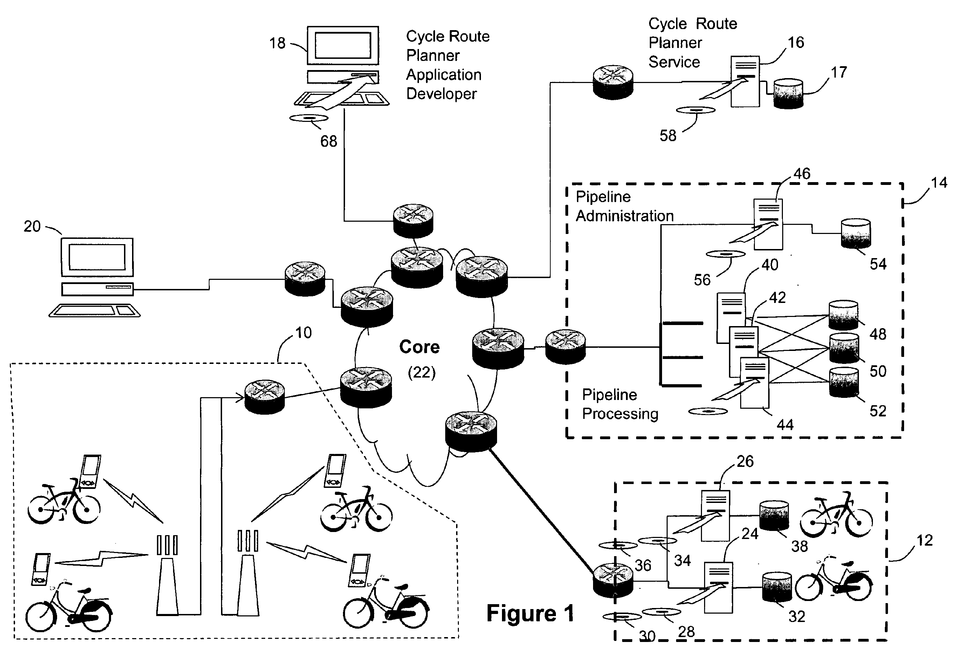

A wide-area computer network (Figure 1) has a mobile data network 10, an information feed provision network 12, a mashup-hosting data centre 14, a server computer 16 offering a web-based cycle route planning application, an application developer's PC 18, and an end user's PC 20. The mobile data network 10, information feed provision network 12, mashup-hosting data centre 14, server computer 16, application developer's PC 18, and end user's PC 20 are interconnected by a wide-area network 22. In this embodiment, the wide-area network is an internetwork. The mashup-hosting data centre 14 is used by an Information and Communication Technologies (ICT) services provider to provide a mashup development and hosting platform to mashup developers.

The information feed provision network 12 has two server computers 24 and 26. The first server computer 24 has web server software 28, and Really Simple Syndication (RSS) feed providing software 30 installed upon it. A first smartphone application and a web-page enabling cyclists to download the first application to their smartphones and run it are stored in the first server computer's persistent storage 32. Similarly, the second server computer 26 has web server software 34, and Really Simple Syndication (RSS) feed providing software 36 installed upon it. A second smartphone application and a web-page enabling cyclists to download the second application to their smartphones and run it are stored in the second server computer's persistent storage 38.

A first group of cyclists who use the mobile data network 10 download the first smartphone application from the first server computer 24 and run that software on their smartphones. Under control of the first smartphone application, the smartphones periodically report their position to first server computer 24 whilst their user is cycling in the environment covered by the mobile data network 10. Under control of the first RSS feed providing software 30, the first server computer 24 publishes an RSS feed, RSS1. That feed is made up of a stream of messages, each of which reports the position of a given smartphone at a given time. A portion of the RSS feed relating to an example of such a message is set out below.

```
 RSS1
 <message>
  <message_instance_id>
     <RSS1_265>
  </message_instance_id>
  <user-id>
     <a8dacabeb336b2606d86261c686d7edf>
  </user-id>
  <location>
     <position>
       <latitude>
          <51.486621>
       </latitude>
       <longitude>
          <-0.232086>
       </longitude>
     </position>
     <time>
       <08:45:32 UTC>
     </time>
     <date>
        <20-12-2011>
     </date>
  </location>
 </message>
```

It is to be noted that the time and date are represented as separate elements - with the time being given in the format hh:mm:ss UTC and the date being given in the format dd-mm-yyyy.

A second group of cyclists who use the mobile data network 10 download the second smartphone application from the second server computer 26 and run that software on their smartphones. Under control of the second smartphone application, the smartphones periodically report their position to second server computer 26 whilst their user is cycling in the environment covered by the mobile data network 10. Under control of the second RSS feed providing software 36, the second server computer 24 publishes an RSS feed, RSS2. That feed is made up of a stream of messages, each of which reports the position of a given smartphone at a given time. A portion of the RSS feed relating to an example of such a message is set out below.

```
RSS2
 <message>
  <message_instance_id>
     <RSS2_764>
  </message_instance_id>
  <user-id>
     <e31d11457562f47f2cabd143b6838b37>
  </user-id>
  <location>
     <position>
       <latitude>
          <51.479672>
       </latitude>
       <longitude>
          <-0.249252>
       </longitude>
     </position>
     <time>
       <2011-12-20T09:04Z>
     </time>
  </location>
 </message>
```

It is to be noted that in contrast to messages belonging to the feed RSS1, the time and date are represented as a single element - given in the format yyyy-mm-ddThh:mmZ.

In this example use case for this embodiment of the present invention, it is envisaged that a developer, working from PC 18 wishes to develop and provide a cycle route planner application which takes advantage of the data feeds RSS1 and RSS2 provided by the two groups of cyclists.

The mashup-hosting data centre 14 comprises a plurality of pipeline component hosting computers 40, 42, 44 and a pipeline administration computer 46. The pipeline component hosting computers 40-44 share network storage devices 48, 50, 52. The pipeline administration computer 46 has persistent storage 54.

The network storage devices 48-52 store software components available for use to developers of combinations of components (mashup developers). The pipeline administration computer 46 publishes a directory of components available to mashup developers. It also provides a facility allowing developers to upload components they have developed to component hosting computers 40-44.

A mashup specification tool is installed on pipeline administration computer 46 from DVD 56. The mashup specification tool is a program which provides developers with a web-based graphical user interface enabling them to orchestrate (i.e. combine together) components in the component library to generate multi-component software applications.

It will be appreciated by those skilled in the art that, whilst the computers are illustrated as separately-housed computers, they will in practice be server blades or such like installed in racks. Also, in practice, the performance monitoring software will probably be downloaded over the Internet rather than being installed from DVD 56.

The developer writes a web based cycle route application which reads queries a cycle route speed database to present end users with the fastest cycle route between two locations entered by the end user. The developer then installs the cycle route application and suitable database management software onto server computer 16 from DVD 58. The developer loads a cycle route database onto persistent storage 17 associated with server computer 16.

In the present use case example, the developer of the cycle route application decides to use the facility offered by the mashup-hosting data centre 14 to define a combination of components (processing nodes) which will take the RSS feeds RSS1 and RSS2 and amalgamate them to provide a derived information feed which can be uploaded onto the cycle route database 17 in order to provide the cycle route application with measured actual cycle speed data.

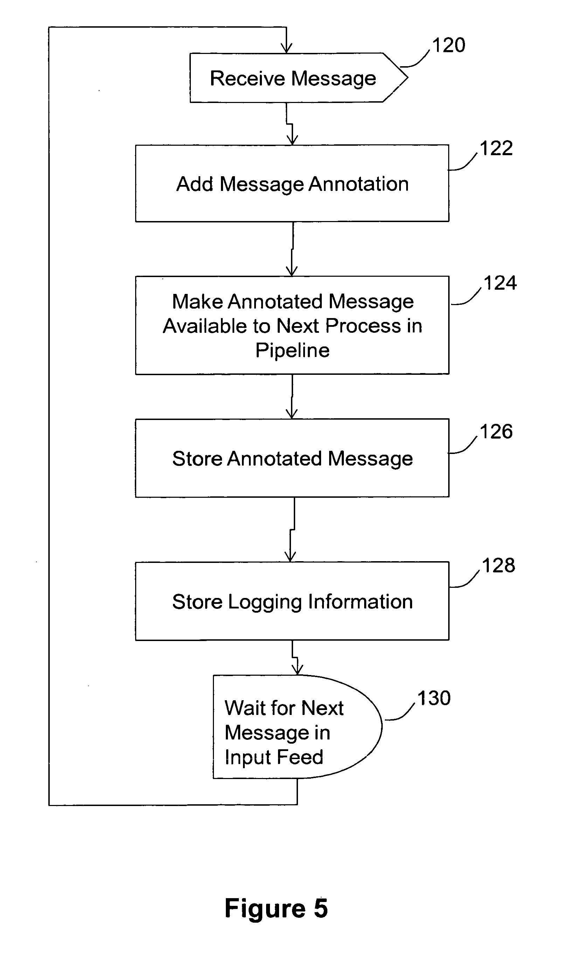

Using the graphical user interface, the developer locates feeds RSS1 and RSS2 in the directory maintained by the pipeline administration computer 46. The pipeline administration computer 46 automatically creates an ingress module for each of the RSS feeds. The function of such ingress modules will be described below with reference to Figure 5.

The developer is then able to select an intermediate module from the library of available mashup components and chain the ingress module together with the selected intermediate module by specifying that the output of the ingress module is to be passed as an input to the selected intermediate module.

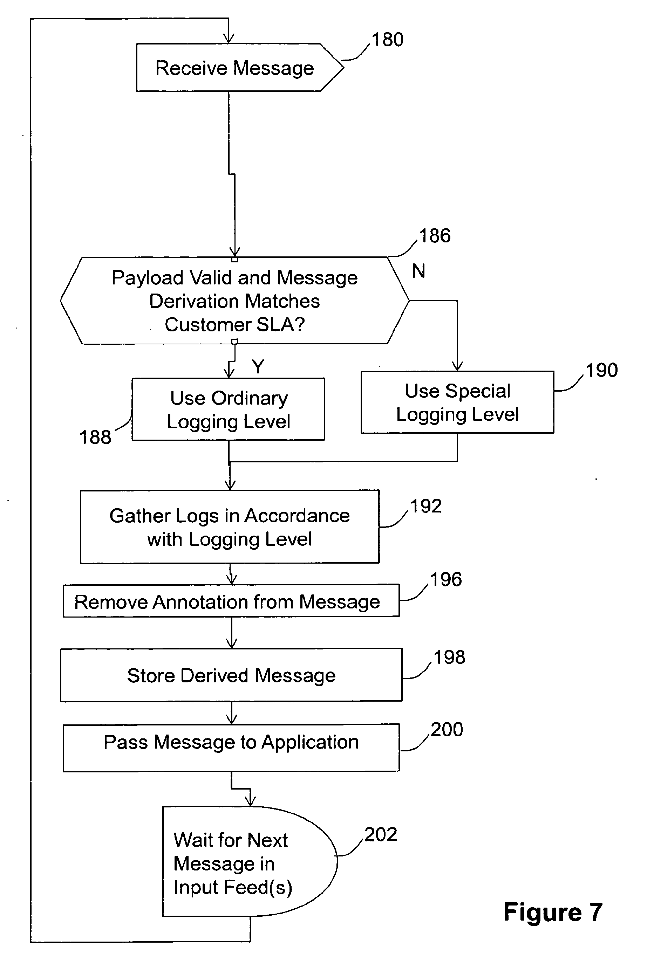

The developer continues chaining modules in this way until he is satisfied that the processing of the input data feeds will provide him with the derived feed his application requires. The pipeline is then terminated by an egress module. The function of an egress module will be described below with reference to Figure 7.

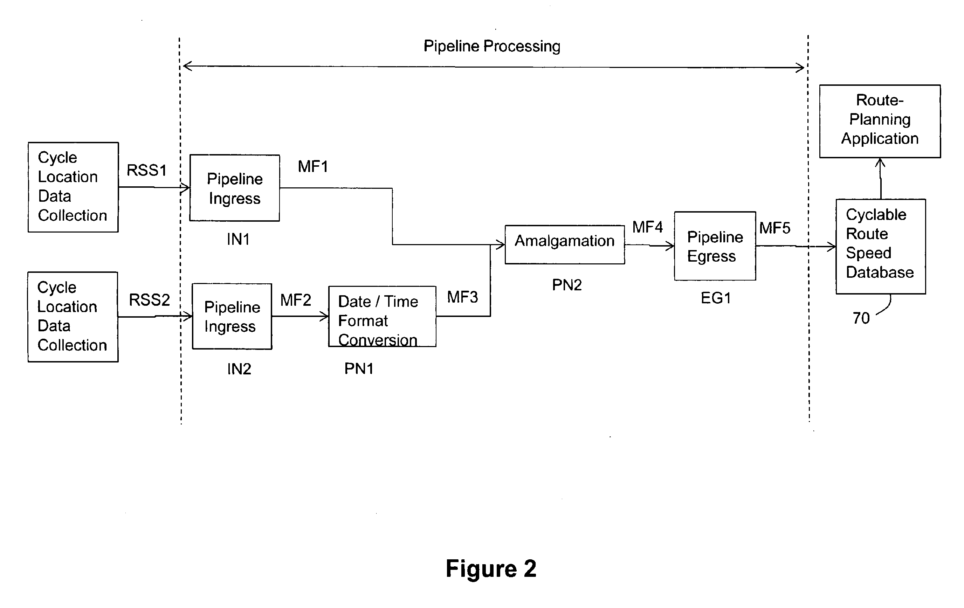

Once the developer's specification of the pipeline is complete, the mashup specification tool 56 saves the pipeline specification in persistent storage 54. The combination of processes in the present example is illustrated in Figure 2.

It will be seen that the pipeline comprises a plurality of processes (IN1, IN2, PN1, PN2, EG1) which are run in the data centre. It is to be understood that each process will in most embodiments run on a different machine (or different virtual machine) within the data centre 14. The different components will cooperate by passing messages from one process to the next process in the pipeline. Each component process (save for the egress process) will process an incoming message and pass the processed message to the next process in the pipeline.

In the present example, each message in the RSS feed RSS1 is passed as an input to Pipeline Ingress process IN1. The ingress process IN1 then processes that message and passes the processed message (feed MF1) to an amalgamation process PN2. The RSS feed RSS2 is passed to a second pipeline ingress process IN2, which processes the feed and passes processed feed MF2 to date / time format conversion process PN1. That process manipulates each message in the feed MF2 to produce a processed message feed MF3 in which the time and date information is formatted in the same way as messages in the feed MF1. Both feed MF1 and MF3 are passed to amalgamation process PN2 which combines the two feeds into a single feed MF4. Finally, the single feed MF4 is passed to pipeline egress process EG1 to generate egress feed MF5, each message of which is used to add a record to a cyclable route database 70 stored in persistent storage 17 of server computer 16.

In the present embodiment, ingress (IN1, IN2) and intermediate processes (PN1, PN2) within the feed processing pipeline cumulatively add annotations to each message they process. The annotations thus provide a record of which processing nodes have processed the message. The administrator of the data centre 14 is thus able to manage the service provided to developers or other customers of the pipeline processing hosting service. By the time the feed for submission to the pipeline egress process EG1 has been derived, the cumulatively added annotations provide a complete record of the sequence of processing nodes which have processed the input feed (RSS1, RSS2) within the processing pipeline. By creating a separate pipeline egress process for each developer or customer, it can be checked that the processing which has taken place in the pipeline is in conformance with customer-specific requirements. It is to be noted that the cumulative adding of annotations to messages passing through the processing pipeline allows the use of ingress and intermediate processes in the pipeline to be shared between different pipelines (and different developers) whilst still allowing separate administration and management of the different pipelines.

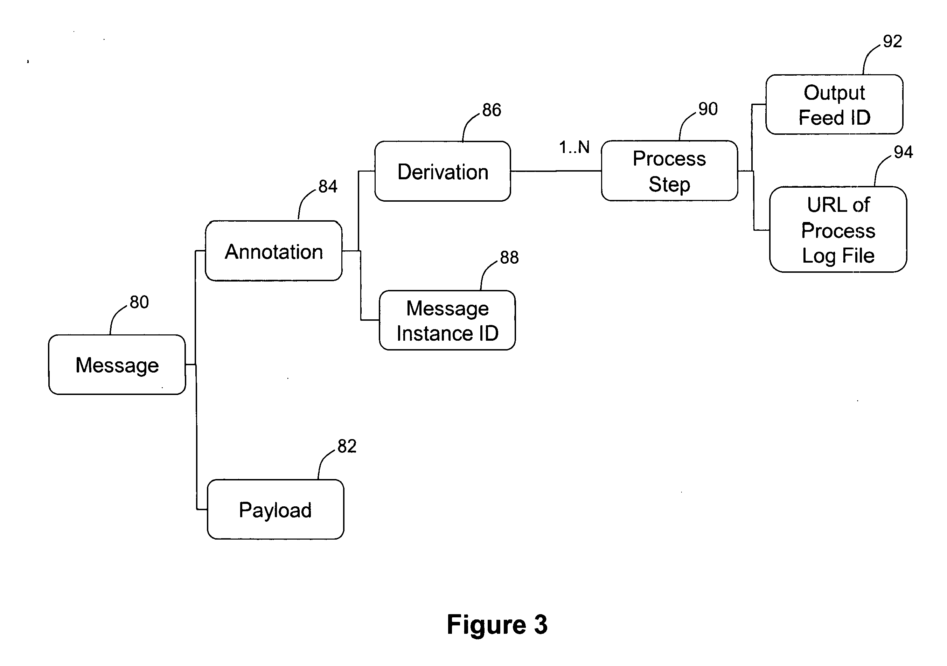

A schema for messages created by processing nodes in the pipeline is shown in Figure 3. Each message element 80 comprises a payload element 82 (which carries information for use by the target of the output feed from the pipeline) and an annotation element 84 which carries information useful to the administration of the pipeline processing. Given that the nature of the payload is not important in embodiments of the present invention, it will not be described further here. The annotation element 84 comprises a derivation element 86 and a message instance ID 88. The message instance ID is a sequence number which identifies individual messages within a feed. The derivation element 86 comprises one or more process step elements 90. Each process step element includes an output feed ID 92 (which identifies the feed which is output by the process) and a Universal Resource Locator 94 which points to the location of a log file maintained by the process. Each process in the pipeline writes information to a log file in relation to each message which it processes. It will be understood that in the normal circumstance where each process runs on a different computer within the data centre 14, each process will store its log file in a different area of storage.

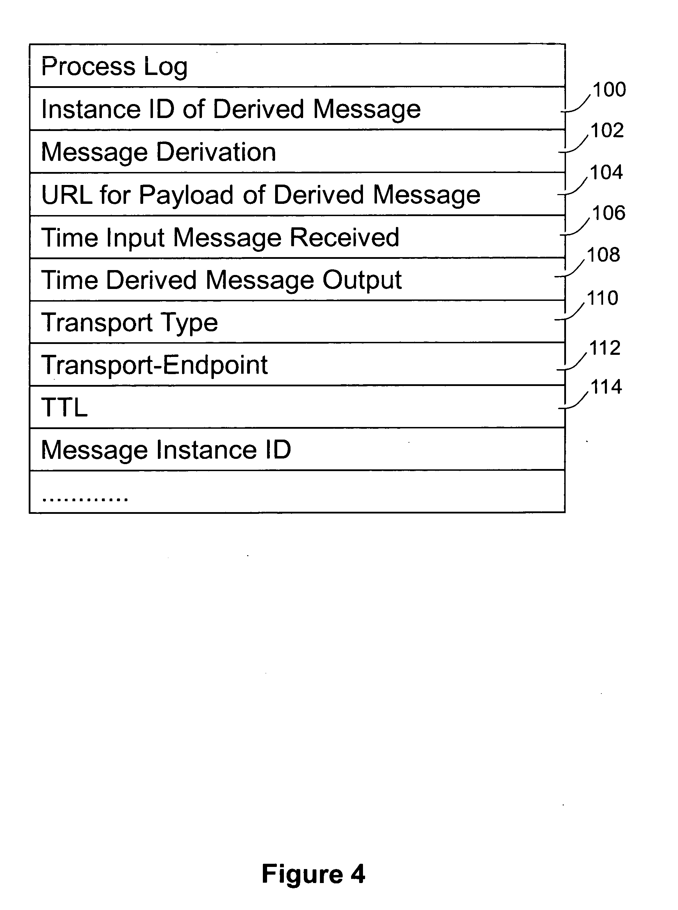

The information written to a log file by each process is illustrated in Figure 4. Each instance of message processing results in an entry being made into the log file associated with the process. Each entry comprises:
i) a message instance ID 100 associated with the derived message output by the process;
ii) a message derivation 102 associated with the derived message output by the process;
iii) a Universal Resource Locator which provides a reference to a file in which the payload of the derived message is stored;
iv) a first performance parameter - in this embodiment, the time at which the process received the input message is recorded in the log file;
v) a second performance parameter - the time at which the process output the message derived by the process;
vi) the transport type;
vii) the transport-endpoint; and
viii) a time to live - which gives the time for which the log file entry is to be stored after being created.

Figure 5 illustrates the processing carried out by a pipeline ingress process. The process begins when a message is received 120 from an input feed. An ingress node does not alter the payload of the input message, and just adds 122 a message annotation (in accordance with the schema seen in Figure 3) to the input message. An example of an annotated message in the present use case example is given below. It will be seen that the only change to the message obtained from input feed RRS1 is the addition of an annotation element. Note that the logging interface URL <IN1_URL:catalog_ref(RSS1)> encapsulates both the node id and the interface URL to keep the annotation lightweight. The parameter in parentheses indicates the input feed which provided the message input into the ingress process. In the case of an ingress process, the parameter enables the administrator of the data centre 14 to see the provenance of the external messages being processed by the pipeline processing system. The output feed id is the same for all messages produced by this ingress process and will subsequently indicate how the component processes in the pipeline are linked together when it appears as the input feed parameter in the logging interface URL element inserted by a downstream process in the pipeline. The message instance ID is just a sequence number which the ingress process increments for each message which it processes. This sequence number enables downstream nodes to access a log entry appropriate to messages derived from this message.

```
 MF1
 <message>
  <annotation>
     <derivation>
        <process_step>
          <output_feed_id>
             <MF1>
          </output_feed_id>
          <logging_interface_URL>
             <IN1_URL:catalog_ref(RSS1)>
          </logging_interface URL>
        </process_step>
     </derivation>
     <message_instance_id>
        <MF1_65824>
     </message_instance_id>
  <annotation>
  <payload>
     <message_instance_id>
        <RSS1_457265>
 .....(this part copied from RSS1)
  </payload>
 </message>
```

The process then makes annotated message available 124 to the next process in the pipeline and stores the annotated message at a predefined location. The process then stores 128 the logging information in storage associated with the machine on which the process is running. The log information stored is a log entry as described in relation to Figure 4. The first two elements in the log entry (the instance ID of the annotated message 100 and the message derivation of the annotated message 102) can be straightforwardly copied from the annotated message produced by the ingress process. The URL 104 for the payload of the annotated message points to the above-mentioned predefined location at which the annotated message is stored. The timestamps 106, 108 are included in the log entry, as are the transport type and transport-endpoint 110, 112. The time-to-live 114 is set to a default value.

Once the log file entry is created, the ingress process waits 130 for another message from the input feed to which it is dedicated.

The ingress node IN2 operates similarly to produce a log entry in its own log file and an annotated message belonging to processed feed MF2 as seen below.

```
 MF2
 <message>
  <annotation>
     <derivation>
       <process_step>
          <output_feed_id>
             <MF2>
          </output_feed_id>
          <logging_interface_URL>
             <IN2_URL:catalog_ref(RSS2)>
          </logging_interface_URL>
       </process_step>
     </derivation>
     <message_instance_id>
       <MF2_65824>
     </message_instance_id>
  </annotation>
  <payload>
     <message_instance_id>
       <RSS2_589764>
 .....(this part copied from RSS2)
  </payload>
 </message>
```

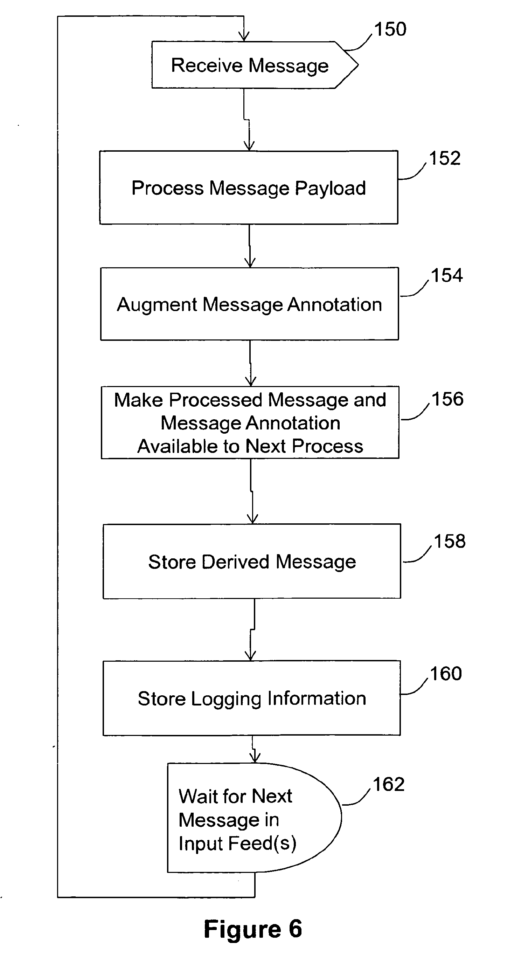

Figure 6 illustrates the processing carried out by intermediate processes (PN1 and PN2) in a pipeline in the present embodiment. The process begins when a message is received 150 from one or more input feeds which the pipeline specification(s) indicate are to be handled by the intermediate process. An intermediate node typically does some processing 152 on the payload of the input message to produce a message with an altered payload, and then adds 154 a process step element (Figure 3 : 90) to the derivation element of the annotation accompanying the input message. An example of an annotated message produced by intermediate process PN1 in the present use case example is given below.

```
 MF3 = STANDARDISED VERSION 0F MF2
 <message>
  <annotation>
     <derivation>
       <process_step>
          <output_feed_id>
             <MF3>
          </output_feed_id>
          <logging_interface_URL>
             <PN1_URL:c_XSLT(MF2)>
          </logging_interface_URL>
       </process_step>
       <process_step>
          <output_feed_id>
            <MF2>
          </output_feed_id>
          <logging_interface_URL>
            <IN2_URL:catalog_ref(RSS2)>
          </logging_interface_URL>
       </process_step>
     </derivation>
     <message_instance_id>
       <MF3_56284>
     </message_instance_id>
  </annotation>
  <payload>
     <user-id>
       <e31d11457562f47f2cabd143b6838b37>
     </user-id>
     <location>
  .....(this part copied from MF2 payload)
       </position>
       <time>
          <09:04 :00 UTC>
       </time>
       <date>
           <20-22-2011>
       <date>
     </location>
  </payload>
 </message>
```

It will be seen that the payload processing carried out by the intermediate node in this instance is the reformatting of the time element of the message from feed MF2 to match the time and date format used in feed MF1.

In addition to that, the derivation element has been augmented by the addition of a new process step element which describes the processing carried out by this node.

As before, the logging interface URL <PN1_URL:c_XSLT(MF2)> encapsulates both the node id and the interface URL to keep the annotation lightweight. Once again, the parameter in parentheses indicates the input feed which provided the message input into the process. Here it indicates that the feed MF2 is the input to this process, and it can then be deduced from the ingress and intermediate process elements that the pipeline processing thus far has seen feed RSS2 passed through ingress node IN2 to generate feed MF2 which was then passed through intermediate node PN1 to generate feed MF3.

It is to be noted that the logging interface URL now additionally includes a configuration reference c_XSLT(). This reference is a pointer to a configuration reference held by the pipeline processing system administrator. The configuration reference is a flexible entity which describes, or points to a description of, processing carried out by the node. The configuration reference might, for example, point to an Extensible Stylesheet Language Transformations (XSLT) file (as in this example), or to an Event Programming Language script described some complex event processing carried out by the node, or to a rule matched for the message.

As with the ingress node, the message instance ID added by the intermediate node is just a sequence number which the ingress process increments for each message which it processes. As before, this sequence number enables downstream nodes to access a log entry appropriate to messages derived from this message.

The process then makes the processed and annotated message available 156 to subsequent processes and stores 158 the processed and annotated message at a message storage location. The intermediate process then stores 160 the logging information in storage associated with the machine on which the process is running. Once again, the log information stored is a log entry as described in relation to Figure 4. The first two elements in the log entry (the instance ID of the annotated message 100 and the message derivation of the annotated message 102) can be straightforwardly copied from the augmented message annotation produced by the intermediate process. The URL 104 for the payload of the annotated message points to the above-mentioned message storage location at which the processed and annotated message is stored. The timestamps 106, 108 are included in the log entry, as are the transport type and transport-endpoint 110, 112. Once again, the time-to-live 114 is set to a default value.

Once the log file entry is created, the intermediate process waits 162 for another message from the input feed to which it is dedicated.

Returning to Figure 2, in the present example, intermediate process PN2 amalgamates message feeds MF1 and MF3 to produce a message feed MF4. An example message from that feed is shown below. It will be seen that a further process step has been added, this time indicating that two input feeds are included in the feed. The other process steps indicate that this particular message has come via intermediate process PN1.

```
 MF4 = AMALGAMATION 0F MF1 AND MF3
 <message>
   <annotation>
     <derivation>
        <process_step>
          <output_feed_id>
             <MF4>
          </output_feed_id>
          <logging_interface_URL>
             <PN2_URL:c_rule(MF1,MF3)>
          </logging_interface_URL>
        </process_step>
        <process_step>
          <output_feed_id>
             <MF3>
          </output_feed_id>
          <logging_interface_URL>
             <PN1_URL:c_XSLT(MF2)>
          </logging_interface_URL>
        </process_step>
        <process_step>
          <output_feed_id>
             <MF2>
          </output_feed_id>
          <logging_interface_URL>
             <IN2_URL:catalog_ref(RSS2)>
          </logging_interface_URL>
        </process_step>
     </derivation>
     <message_instance_id>
        <MF4_1435686>
     </message_instance_id>
  </annotation>
  <payload>
   .....(this part copied from an MF3 message in this example)
     </location>
  </payload>
 </message>
```

Figure 7 shows the processing performed by an egress node.

On receiving a message at the egress process, the egress node checks 186 that the message annotations (in particular the process step elements) match the expected derivation of the message via the pipeline. A comparison can, for example, be made with the pipeline specification (Figure 2) stored for this customer. Such a pipeline specification might also includes required node configurations with can be checked against the configuration references included in the message annotation on arrival at the egress process.

In general, a comparison can be with an Service Level Agreement (SLA) agreed with the customer - this can include customer requirements relating to performance (latency, process availability etc).

In order to establish whether such requirements have been met, the log files stored by the ingress and intermediate nodes can be accessed.

If it is found that the message annotation indicates that there is some discrepancy in the pipeline processing which has occurred, a logging level is raised 190. Otherwise, a default logging level is used 188.

The URL of the log files of all the processes in the pipeline are read from the interface elements in the process step elements of the message annotation. The log files 192 are then gathered from those processing nodes in accordance with the logging level set.

This allows a comparison with, say, latency requirements included in the customer requirements. In general, it will be seen how the administrator of the pipeline processing system is able to monitor the performance of the system against customer requirements whilst using a relatively lightweight pipeline management system.

The contents of the node log history are exposed through the logging interface provided by each process. In the present embodiment, this is implemented as web services with the following methods:
- GetNodeLog(message_ID) → returns logging txt and message XML
- GetAllLogging() → Returns text for all logging in buffer where log files are stored
- GetBufferSize() → for performance
- DeleteNodeLog(Message_id) → Delete log entry from buffer
- ClearAllLogging() → Clear all log entries.

The process the Egress node follows to collect the stream logs will be dictated by a debug level. The level setting will dictate the granularity of the logging for that customer for each validation outcome. An example of the different logging contents could be:
1. Everything: The input, output XML of each node with full buffer records
2. Only the input xml to the Ingress and XML at the Egress and the final stream annotation.
3. Just the final stream annotation.
4. Boolean validation result.
5. No logging.

The debug level will be dependent on the outcome of the validation step (errors found) and the SLA for the customer consuming the message. It will also be possible to override these using a system wide debug level for system wide error analysis. So for example:
Gold SLA: logging option 1
Silver SLA: logging option 2
Bronze SLA: logging option 5

Having carried out the administration steps, the egress process removes 196 the annotation from the incoming message, stores 198 the derived message, and also passes 200 the derived message to the cycle route planning application.

Thereafter, the egress process awaits 202 the next input message.

It will be seen how the above embodiment provides a relatively lightweight management method in systems offering different users different compositions of a shared set of software components (e.g. web services).

Many variations on the above described embodiments are possible, by way of example, these include:
i) the example use case is one of a myriad of possible uses for the mashup-hosting data centre. In general, embodiments can handle input from any sort of sensor, document, database etc.
ii) whilst the above embodiment showed the service composition being composed of services running in a data centre, in many practical embodiments the service composition will be composed of services running on computers which are geographically distant from one another.
iii) In the above embodiment, a life expectancy was set on each message, after which it would be removed from the node log. This could only be used if the expected processing time from Ingress to Egress was predictable. It provides a lighter weight implementation by removing the need for a deletion message. In alternative embodiments, messages are deleted automatically. The Egress process invokes the clearing of messages as it knows the message success and has the details (message annotation) to clear the message history.

In summary of the above disclosure, a system for managing user-specified compositions of software components is disclosed. The management of such distributed software applications is potentially so complex as to have been largely neglected. In embodiments of the invention, each composition includes a user-specific egress component at the end of the composition. By arranging software components to cumulatively annotate their output with an indication that they have been involved in the composition, the data arriving at the egress node can be checked against a specification of the user-specified composition. Importantly, by using annotations in this way, component software processes can be shared between different users without requiring an overly-complex management system. Additionally, in preferred embodiments, the annotation includes a reference to log files generated by each software component involved in the composition. In this way, the amount of information that needs to be included in the annotation is reduced whilst still allowing the egress component to access detailed information about the processing which the data arriving at the egress component has undergone.

## Claims

1. A method of managing the operation of one or more distributed software applications involving the sequential execution of a plurality of software components, said method comprising:
arranging one or more of said software components to add information concerning the software component together with data transformed by said component to a subsequent software component in said sequential execution; and
at said subsequent software component, checking the annotation of said data for compliance with stored expectations.

2. A method according to claim 1 in which a plurality of distributed software applications share one or more of said software components.

3. A method according to claim 1 wherein each software component involved in said sequential execution cumulatively adds to said information.

4. A method according to claim 3 wherein said information provided by each software component includes an indication of the source of the data received by said component, and an identifier for the output data derived from said source data after processing by said software component.

5. A method according to claim 3 wherein said information provided by each software component includes a reference to a process log maintained by said software component.

6. A method according to claim 1 further comprising the step of receiving a specification of a required sequential execution and comparing said message annotation to said required sequential execution.

7. A method according to claim 1 wherein the subsequent software component is the final software component in said sequential execution.

8. A method according to claim 1 wherein said information includes a reference to a description of the processing carried out by each software component.
